# FASCICULE DE BREVET EUROPEEN

(11) **EP 3 891 835 B1**
(45) Date de publication et mention de la délivrance du brevet: **10.08.2022**
(21) Numéro de dépôt: 19813010.6
(22) Date de dépôt: 04.12.2019
(51) Int. Cl.: H01M 8/2483, H01M 8/247, H01M 8/248

(54) **PILE À COMBUSTIBLE COMPRENANT AU MOINS UN ORGANE DE TRACTION INTÉGRÉ**
BRENNSTOFFZELLE BEINHALTEND WENIGSTENS EIN INTEGRIERTES ZUGELEMENT
FUEL CELL COMPRISING AT LEAST ONE INTEGRATED TENSION ELEMENT

(30) Priorité: 06.12.2018 FR 1872463
(43) Date de publication de la demande: 13.10.2021
(73) Titulaire: Safran Power Units, 31200 Toulouse (FR)
(72) Inventeur: QUINTON, Romain, 77550 Moissy-Cramayel (FR); JOLLYS, Jean-Baptiste, 77550 Moissy-Cramayel (FR); HORDE, Théophile, 77550 Moissy-Cramayel (FR)
(74) Mandataire: Argyma
(86) Numéro de dépôt international: PCT/EP2019/083645
(87) Numéro de publication internationale: WO 2020/115119

(56) Documents cités:
- DE-A1- 19 948 086
- DE-T2- 69 503 648
- US-A1- 2002 127 453
- US-A1- 2004 062 967
- US-A1- 2005 095 484

## Description

### DOMAINE TECHNIQUE ET OBJET DE L'INVENTION

La présente invention concerne le domaine des piles à combustible, en particulier, dans le domaine aéronautique.

### ETAT DE LA TECHNIQUE

Une pile à combustible permet de produire de l'énergie électrique à partir d'une réaction électrochimique entre différents fluides. De manière classique, une pile à combustible est alimentée en dihydrogène et en dioxygène qui réagissent dans la pile à combustible afin de générer de l'énergie électrique.

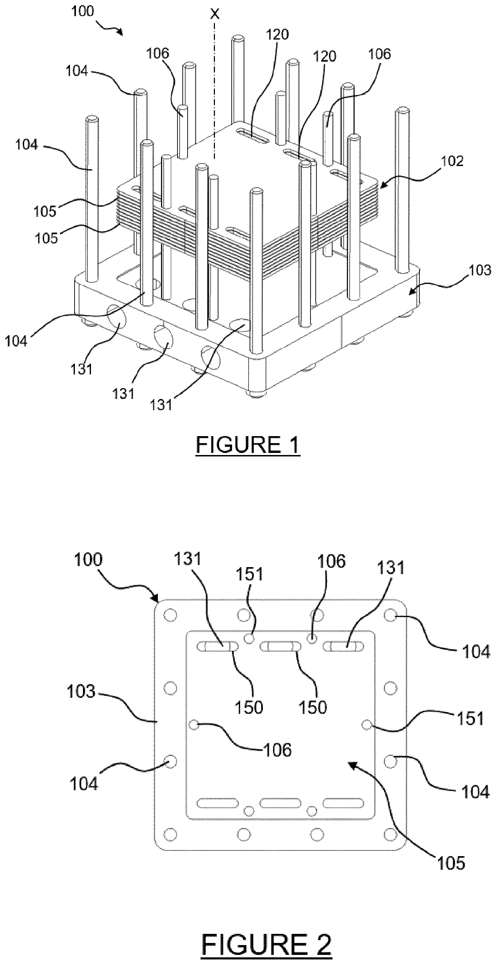

Comme illustré sur la figure 1, une pile à combustible 100 comprend un empilement 102 comprenant une pluralité de cellules 105 alignées selon un axe d'empilement X. Chaque cellule 105 comprend une pluralité d'ouvertures de circulation de fluide 150. Les ouvertures de circulation de fluide 150 sont alignées parallèlement à l'axe d'empilement X afin de former une pluralité de canalisations de circulation de fluide 120 dans l'empilement 102. L'empilement 102 des cellules 105, désigné « Stack » en langue anglaise, permet la réaction électrochimique à partir des fluides. Comme illustré à la figure 2, chaque cellule 105 se présente sous la forme d'une plaque comprenant, d'une part, des ouvertures de circulation de fluide 150 et, d'autre part, des ouvertures de guidage 151. La pile à combustible 100 comporte des organes de guidage rectilignes 106, de section circulaire, qui s'étendent dans les ouvertures de guidage 151 de section circulaire. Ainsi, les ouvertures de circulation 150, de forme oblongue sur la figure 1, sont alignées pour former des canalisations de circulation de fluide 120 dans l'empilement 102. De manière connue, la pile à combustible 100 comporte des joints d'étanchéité montés entre deux cellules 105 adjacentes et comprenant des découpes au niveau des ouvertures de circulation 150 afin de former des canalisations de circulation de fluide 120 étanches pour isoler les fluides entre eux, tout en permettant de canaliser les fluides vers chacune des faces des cellules 105.

De manière connue, une pile à combustible 100 comporte en outre deux plaques terminales 103 placées aux extrémités de l'empilement 102 selon l'axe d'empilement X et une pluralité d'organes de traction 104, connus de l'homme du métier sous le terme « tirant », reliant les plaques terminales 103 entre elles afin de comprimer l'empilement 102. Autrement dit, les cellules 105 sont prises en sandwich entre les plaques terminales 103. De manière connue, les plaques terminales 103 comprennent également des conduites 131 reliées fluidiquement aux canalisations de circulation de fluide 120 afin d'alimenter l'empilement 102 en fluides et d'évacuer lesdits fluides.

De manière connue, les organes de traction 104 se présentent sous la forme de tiges filetées dont les extrémités reçoivent des écrous de serrage. Comme illustré à la figure 1, les organes de traction 104 s'étendent à la périphérie des plaques terminales 103 de manière à appliquer un effort de compression homogène sur l'empilement 102 positionné au centre des plaques terminales 103. Du fait de cette contrainte, les plaques terminales 103 présentent des dimensions supérieures à celles des cellules 105 comme illustré à la figure 2. Contrairement aux organes de guidage 106, des efforts de traction transitent dans les organes de traction 104. Pour cette raison, les organes de traction 104 possèdent un diamètre plus important que celui des organes de guidage 106 comme illustré à la figure 1.

Une telle pile à combustible 100 présente des inconvénients. En effet, de nombreux organes de guidage 106 et de nombreux organes de traction 104 sont nécessaires pour garantir un montage précis et une étanchéité optimale des cellules 105 dans l'empilement 102, ce qui rend complexe un tel montage et augmente la masse et l'encombrement de la pile à combustible 100. De plus, la présence de nombreux organes de guidage 106 et de nombreux organes de traction 104 impose de prévoir de nombreuses ouvertures 150, 151 dans les cellules 105, ce qui augmente leur coût de fabrication.

Il existe donc un besoin pour une pile à combustible permettant de résoudre au moins certains de ces inconvénients.

Il est connu des documents US 200406267 A1, DE 19948086 A1, DE 69503648 T2 et US 2002127453, des piles à combustible comprenant un empilement de plaques prises en sandwich entre deux plaques terminales, maintenues au moyen de tirants. Les tirants sont positionnés de manière à traverser chaque plaque par des orifices permettant également la circulation de fluides dans la pile.

### PRESENTATION GENERALE DE L'INVENTION

A cet effet, l'invention concerne une pile à combustible comprenant un empilement comprenant une pluralité de cellules alignées selon un axe d'empilement X, chaque cellule comprenant une pluralité d'ouvertures de circulation de fluide, lesdites ouvertures de circulation de fluide étant alignées parallèlement à l'axe d'empilement X afin de former une pluralité de canalisations de circulation de fluide dans l'empilement, deux plaques terminales placées aux extrémités de l'empilement selon l'axe d'empilement X et au moins un organe de traction reliant les plaques terminales entre elles afin de comprimer l'empilement.

L'invention est remarquable en ce que l'organe de traction est monté dans une canalisation de circulation de fluide de l'empilement.

Grâce à l'invention, l'encombrement d'une pile à combustible est réduit étant donné que l'organe de traction est intégré dans le volume de l'empilement contrairement à l'art antérieur qui imposait que les organes de traction soient placés autour de l'empilement. Comme les organes de traction sont plus près de l'empilement, la compression de l'empilement est plus uniforme. De manière avantageuse, cela permet de diminuer les dimensions des plaques terminales. Comme les plaques terminales sont massives, la masse de la pile à combustible peut être réduite de manière importante. De manière avantageuse, un organe de traction remplit, d'une part, une fonction de guidage et, d'autre part, une fonction de traction. Grâce à l'invention, les organes de guidage selon l'art antérieur sont avantageusement supprimés. De manière avantageuse, le nombre d'organes de traction est également réduit, ce qui limite la masse de la pile à combustible. De manière avantageuse, à puissance équivalente, l'encombrement et la masse de la pile à combustible sont réduits.

Une solution immédiate aurait pu consister à remplacer les organes de guidage existants par des organes de traction mais cela aurait conduit à prévoir des ouvertures de guidage de plus grandes dimensions, ce qui aurait impacté négativement la formation des ouvertures de circulation de fluide dans chaque cellule. Grâce à l'invention, les organes de guidage sont remplacés mais également déplacés dans les ouvertures de circulation, ce qui démontre une activité inventive.

De manière préférée, la pile à combustible comprend une pluralité d'organes de traction reliant les plaques terminales entre elles afin de comprimer l'empilement et les organes de traction sont respectivement montés dans des canalisations de circulation de fluide de l'empilement. Ainsi, plusieurs organes de traction sont utilisés pour permettre une compression homogène tout en limitant l'encombrement de la pile à combustible.

De préférence, la pile à combustible comporte au moins un organe de traction interne monté dans une canalisation de circulation de fluide de l'empilement et au moins un organe de traction externe monté extérieurement à l'empilement afin de garantir une compression optimale indépendamment de la position des canalisations de circulation.

De manière préférée, la canalisation de circulation de fluide, dans laquelle s'étend l'organe de traction, présente une section supérieure à la section dudit organe de traction afin de permettre la circulation d'un fluide dans la canalisation de circulation de fluide extérieurement audit organe de traction.

Selon un aspect de l'invention, chaque ouverture de circulation de fluide de la canalisation de circulation de fluide, dans laquelle s'étend l'organe de traction, possède deux portions latérales étroites et une portion centrale élargie. La portion centrale élargie permet avantageusement de recevoir un organe de traction tandis que les portions latérales permettent d'offrir une section de circulation de fluide importante.

De préférence, chaque cellule comporte uniquement des ouvertures de circulation de fluide. Autrement dit, chaque cellule ne comprend pas d'ouverture de guidage, ce qui limite le nombre d'ouvertures devant être réalisées dans une cellule. Le coût et la durée de fabrication d'une cellule sont réduits.

De manière préférée, un organe de traction s'étend dans chacune des ouvertures de circulation de fluide de chacune des cellules. La compression et le guidage des cellules sont réalisés de manière homogène dans l'empilement.

Selon un aspect préféré de l'invention, l'organe de traction est monté dans une gaine. Une telle gaine permet de protéger le corps de l'organe de traction à l'encontre du fluide circulant dans la canalisation de circulation de fluide dans laquelle est monté l'organe de traction. De même, la gaine permet de guider une cellule par coopération avec une ouverture de circulation de fluide de la cellule. En outre, la section de l'organe de traction peut être définie pour remplir une fonction de détrompage accélérant les étapes d'empilement des cellules.

De manière préférée, la gaine est configurée pour coopérer par complémentarité de formes avec une ouverture de circulation de fluide de la canalisation de circulation de fluide dans laquelle est monté l'organe de traction. Ainsi, les ouvertures de circulation permettent également de guider les cellules lors de leur empilement, ce qui limite le nombre d'ouvertures dans chaque cellule. L'organe de traction rempli ainsi une fonction de guidage.

De préférence, la gaine est réalisée dans un matériau neutre vis-à-vis du fluide circulant dans la canalisation de circulation de fluide dans laquelle est monté l'organe de traction. Cela est particulièrement avantageux lorsque le fluide est du dihydrogène ou un fluide de refroidissement. Une telle caractéristique permet d'éviter toute réaction entre le fluide et la gaine mais également entre le fluide et l'organe de traction monté dans la gaine.

De manière préférée, la gaine comprend au moins une rainure de circulation de fluide. Ainsi, la gaine permet d'assurer une fonction de guidage et/ou de protection tout en permettant de laisser circuler une quantité suffisante de fluide.

L'invention concerne en outre un procédé d'assemblage d'une pile à combustible telle que présentée précédemment, ledit procédé comprenant :
- une étape de montage d'au moins un organe de traction dans une canalisation de circulation de fluide de l'empilement,
- une étape de liaison des plaques terminales par l'organe de traction de manière à compresser l'empilement.

L'invention concerne également un procédé d'utilisation d'une pile à combustible telle que présentée précédemment, ledit procédé comprenant une étape de circulation d'un fluide dans la canalisation de circulation de fluide de l'empilement dans laquelle est monté l'organe de traction.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une vue schématique d'une pile à combustible selon l'art antérieur décrit précédemment.
La figure 2 est une vue schématique de dessus de la pile de la figure 1.
La figure 3 est une vue schématique d'une forme de réalisation d'une pile à combustible selon l'invention.
La figure 4 est une vue schématique d'une forme de réalisation d'une pile à combustible selon l'invention en vue éclatée.
La figure 5 est une vue schématique de dessus d'une cellule de la pile à combustible de la figure 4.
La figure 6 est une vue schématique de dessus d'une ouverture de circulation de fluide d'une cellule selon l'invention.
La figure 7 est une vue en coupe transversale d'un organe de traction équipé d'une gaine.
Les figures 8 et 9 sont des représentations schématiques du montage d'un organe de traction équipé d'une gaine dans une ouverture de circulation de fluide selon deux orientations différentes.
La figure 10 est une vue schématique de dessus d'une cellule de la pile à combustible de la figure 4 dans laquelle sont montés des organes de traction équipés de gaines.
La figure 11 est une vue schématique de dessus d'une plaque terminale de la pile à combustible de la figure 4 et
La figure 12 est une vue schématique de dessus de la pile à combustible de la figure 4.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE D'UNE FORME DE REALISATION DE L'INVENTION

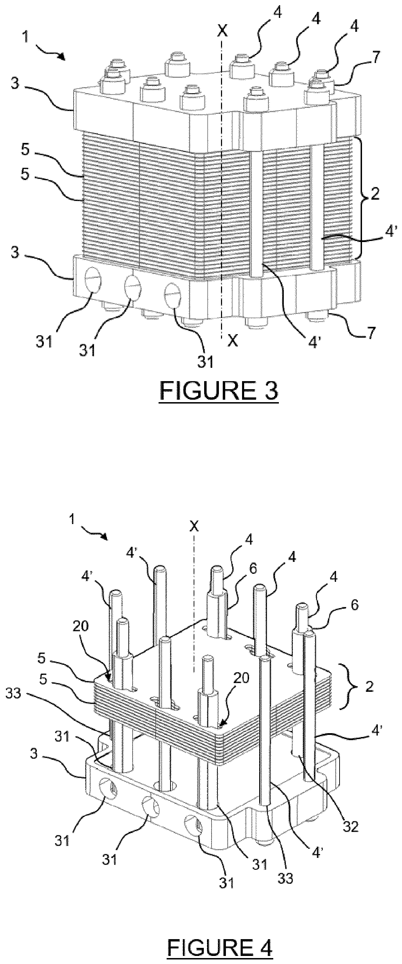

En référence à la figure 3, il est représenté une pile à combustible 1 selon une forme de réalisation de l'invention pour générer de l'énergie électrique à partir d'une réaction électrochimique.

De manière classique, différents fluides circulent à travers la pile à combustible 1 afin de réagir ensemble et ainsi générer de l'énergie électrique. Une telle réaction peut notamment être une réaction d'oxydo-réduction entre du dioxygène et du dihydrogène. La pile à combustible 1 est ainsi alimentée en dioxygène et en dihydrogène. La réaction d'oxydo-réduction génère également de l'eau qui est évacuée de la pile à combustible 1. Dans un mode de réalisation préférée, la pile à combustible 1 est une pile à haute température dans laquelle l'eau générée par la réaction est à l'état de vapeur. En effet, de l'eau à l'état de vapeur est aisément évacuée comme cela sera décrit par la suite. La pile à combustible 1 est également alimentée en fluide de refroidissement afin d'évacuer la chaleur générée par la réaction électrochimique. Un tel fluide de refroidissement est un fluide caloporteur, tel que de l'huile ou de l'eau qui peut être mélangé avec des additifs.

Comme illustré aux figures 3 et 4, la pile à combustible 1 comprend un empilement 2 comprenant une pluralité de cellules 5 alignées selon un axe d'empilement X. Chaque cellule 5 comprend une pluralité d'ouvertures de circulation de fluide 50, lesdites ouvertures de circulation de fluide 50 étant alignées parallèlement à l'axe d'empilement X afin de former une pluralité de canalisations de circulation de fluide 20 dans l'empilement 2. La pile à combustible 1 comporte en outre deux plaques terminales 3 placées aux extrémités de l'empilement 2 selon l'axe d'empilement X. La pile à combustible 1 comporte en outre une pluralité d'organe de traction 4, 4' reliant les plaques terminales 3 entre elles afin de comprimer l'empilement 2.

Selon l'invention, des organes de traction internes 4 sont montés dans les canalisations de circulation de fluide 20 de l'empilement 2 afin d'être intégrés dans l'empilement 2 comme cela va être présenté par la suite.

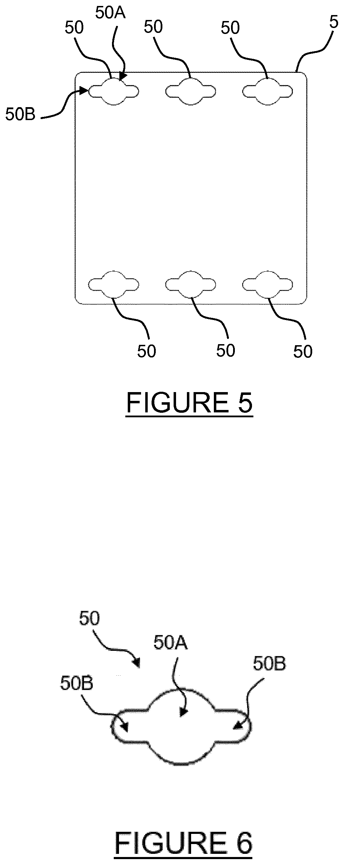

Comme indiqué précédemment, l'empilement 2 comprend une pluralité de cellules 5 alignées selon un axe d'empilement X. En référence à la figure 5, chaque cellule 5 comprend une pluralité d'ouvertures de circulation de fluide 50, lesdites ouvertures de circulation de fluide 50 étant alignées parallèlement à l'axe d'empilement X afin de former une pluralité de canalisations de circulation de fluide 20 dans l'empilement 2 comme représenté à la figure 4. Les organes de traction internes 4 ont une fonction d'alignement et de positionnement des cellules 5 de l'empilement 2.

Chaque cellule 5 comprend deux électrodes aux niveaux desquelles a lieu la réaction électrochimique générant de l'énergie électrique. Pour réaliser une telle réaction, une cellule 5 est alimentée par différents fluides, notamment en dioxygène et en dihydrogène. Une telle cellule 5 est également désignée cellule électrochimique. Dans cette forme de réalisation, chaque cellule 5 comporte six ouvertures de circulation de fluide 50 afin de former six canalisations de circulation de fluide 20 dans l'empilement 2. Il va de soi que le nombre de canalisations de circulation de fluide 20 pourrait être différent.

Dans cet exemple, l'empilement 2 comprend trois canalisations d'alimentation et trois canalisations d'évacuation permettant la circulation séparée de trois fluides à travers les cellules : du dihydrogène, du dioxygène et un liquide de refroidissement. L'eau à l'état de vapeur généré par la réaction d'oxydo-réduction n'a avantageusement pas besoin de canalisation pour être évacuée, ce qui limite la complexité de l'empilement et rend une telle évacuation aisée.

Dans cet exemple, en référence à la figure 5, chaque cellule 5 se présente sous la forme d'une plaque de forme carré définissant quatre bords. Trois ouvertures de circulation de fluide 50 sont placées le long d'un premier bord tandis que trois ouvertures de circulation de fluide 50 sont placées le long d'un deuxième bord, opposé audit premier bord.

En référence aux figures 5 et 6, chaque ouverture de circulation 50 possède une forme allongée. De manière préférée, chaque ouverture de circulation 50 comporte une portion centrale élargie 50A de manière à permettre l'insertion d'un organe de traction interne 4 comme cela sera présenté par la suite. Dans cet exemple, chaque ouverture de circulation 50 possède deux portions latérales étroites 50B et une portion centrale élargie 50A de manière à permettre une circulation du fluide dans les portions latérales 50B. De préférence, la portion centrale élargie 50A présente une forme circulaire adaptée pour coopérer avec une gaine 6 comme cela sera présenté par la suite. De manière préférée, la forme de chaque ouverture de circulation 50 est la réunion d'une forme oblongue et d'une forme circulaire concentriques.

L'empilement 2 comporte de manière préférée des joints d'étanchéités placés entre les ouvertures de circulation de fluide 50 des cellules 5 afin d'assurer l'étanchéité des canalisations de circulation 20 dans l'empilement 2 lorsque les cellules 5 sont comprimées.

Comme indiqué précédemment, en référence aux figures 3 et 4, la pile à combustible 1 comporte une pluralité d'organes de traction 4, 4' reliant les plaques terminales 3 entre elles afin de comprimer l'empilement 2.

Par la suite, on distingue, d'une part, des organes de traction internes 4 qui s'étendent dans les canalisations de circulation de fluide 20 de l'empilement 2 et, d'autre part, des organes de traction externes 4' qui s'étendent extérieurement aux canalisations de circulation de fluide 20 de l'empilement 2.

Dans cet exemple de réalisation, les organes de traction internes 4 et les organes de traction externes 4' possèdent une structure identique mais il va de soi qu'elles pourraient être différentes. Chaque organe de traction 4, 4' s'étend longitudinalement afin de relier les deux plaques terminales 3 entre elles. Dans cet exemple, chaque organe de traction 4, 4' se présente sous la forme d'une tige rectiligne, de section circulaire, s'étendant parallèlement à l'axe d'empilement X. Chaque organe de traction 4, 4' comporte des extrémités qui sont filetées de manière à recevoir des écrous de serrage 7, comme illustré sur la figure 3, afin de réaliser une compression. Après assemblage, les extrémités des organes de traction 4, 4' s'étendent en saillie des plaques terminales 3 de manière à permettre le vissage des écrous de serrage 7. Il va de soi qu'un organe de traction 4, 4' pourrait posséder une forme différente afin de réaliser une traction. De préférence, les organes de traction 4, 4' sont en matériau métallique afin de faire transiter des efforts de compression importants.

Selon une forme de réalisation non représentée, une canalisation de circulation 20 comporte plusieurs organes de traction internes 4. De manière avantageuse, le nombre et les dimensions des ouvertures de circulation 50 peuvent être adaptés.

En référence à la figure 3, la pile à combustible 1 comprend deux plaques terminales 3 qui sont montées à chaque extrémité de l'empilement 2 afin de comprimer les cellules 5. Autrement dit, les plaques terminales 3 sont montées de part et d'autre de l'empilement 2 afin de prendre ce dernier en sandwich et ainsi comprimer les cellules 5 selon l'axe d'empilement X.

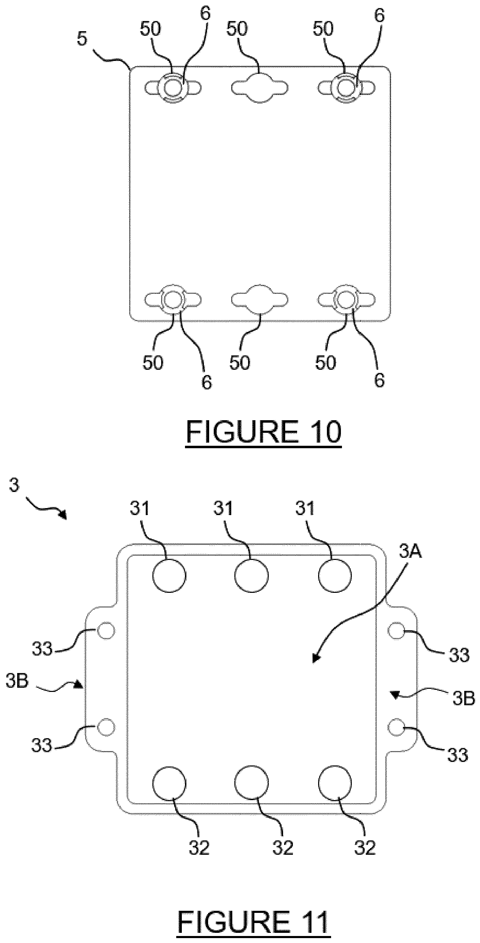

Comme illustré sur la figure 11, chaque plaque terminale 3 comporte une partie centrale 3A destinée à coopérer avec une extrémité de l'empilement 2 et les organes de traction internes 4. Chaque plaque terminale 3 comporte en outre deux parties latérales 3B configurées pour permettre le montage d'organes de traction externes 4'.

De manière avantageuse, la plaque terminale 3 possède un encombrement réduit par comparaison à une plaque terminale selon l'art antérieur. La partie centrale 3A possède des dimensions proches de celles d'une cellule 5, ce qui diffère de l'art antérieur. La partie centrale 3A de la plaque terminale 3 comporte des ouvertures d'alimentation 31 et des ouvertures d'évacuation 32 reliées fluidiquement aux canalisations de circulation 20 de l'empilement 2 afin de les alimenter en fluides et d'évacuer lesdits fluides. Dans cet exemple, en référence à la figure 11, la plaque terminale 3 comporte dans sa partie centrale 3A un alignement de trois ouvertures d'alimentation 31 et un alignement de trois ouvertures d'évacuation 32. Les ouvertures d'alimentation 31 et les ouvertures d'évacuation 32 de chaque plaque terminale 3 sont reliées à un système d'alimentation et d'évacuation des fluides de la pile à combustible 1. Autrement dit, les fluides alimentent la pile à combustible 1 en entrant par les ouvertures d'alimentation 31, puis en passant dans les canalisations de circulation 20 de l'empilement 2. Enfin, après réaction, les fluides sont évacués de la pile à combustible 1 par les ouvertures d'évacuation 32.

Comme illustré à la figure 11, la plaque terminale 3 présente une forme de pavé définissant quatre bords, les ouvertures d'alimentation 31 sont placées le long d'un premier bord de la plaque terminale 3 et les ouvertures d'évacuation 32 sont placées le long d'un deuxième bord de la plaque terminale 3, opposé audit premier bord.

Afin de garantir une compression homogène, chaque plaque terminale 3 comprend deux parties latérales 3B s'étendant en saillie depuis chacun du troisième et du quatrième bord du pavé dont la plaque terminale 3 a la forme. Dans cet exemple, chaque partie latérale 3B de la plaque terminale 3 comporte deux ouvertures de passage 33 dans lesquelles peuvent s'étendre des organes de traction externes 4'. Il va de soi que le nombre d'ouvertures de passage 33 pourrait être différent.

La présence d'organes de traction internes 4 dans les ouvertures d'alimentation 31 et les ouvertures d'évacuation 32 ainsi que la présence d'organes de traction externes 4' dans les ouvertures de passage 33 permettent de réaliser une traction périphérique sur l'empilement 2. Les plaques terminales 3 permettent ainsi d'appliquer une compression homogène afin d'assurer l'étanchéité des canalisations de circulation 20 entre les cellules 5.

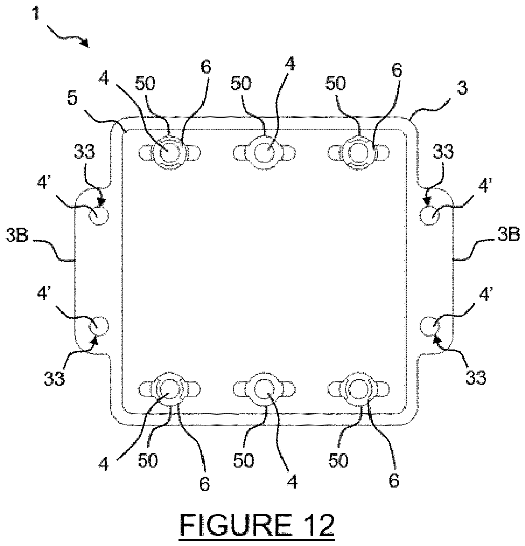

Comme illustré à la figure 4, quatre organes de traction externes 4' sont montés entre les plaques terminales 3. Chacune des extrémités des organes de traction externes 4' s'étendant dans une ouverture de passage 33 comme illustré à la figure 12. Le montage d'un organe de traction externe 4' est analogue à l'art antérieur et ne sera pas présenté plus en détails.

Dans cet exemple, un organe de traction interne 4 est monté dans chaque canalisation de circulation 20 de l'empilement 2. Pour monter un organe de traction interne 4 dans une canalisation de circulation 20, ce dernier est introduit dans les ouvertures de circulation 50 des cellules 5 et dans les ouvertures 31, 32 des plaques terminales 3. Les extrémités de chaque organe de traction 4, 4' s'étend en saillie des plaques terminales 3 afin de permettre le montage d'écrous de serrage 7 pour permettre la compression de l'empilement 2. De plus, un joint d'étanchéité est placé entre l'organe de traction interne 4 et l'ouverture 31, 32 de la plaque terminale 3 dans laquelle l'organe de traction 4 est monté afin d'assurer l'étanchéité de chaque canalisation de circulation 20 au niveau des plaques terminales 3.

Comme illustré à la figure 12, chaque organe de traction interne 4 s'étend dans la portion élargie 50A de l'ouverture de circulation de fluide 50 d'une cellule 5. Ainsi, le fluide est libre de circuler dans les portions latérales 50B de l'ouverture de circulation de fluide 50 d'une cellule 5 mais également extérieurement à l'organe de traction interne 4 dans la portion élargie 50A. Ainsi, malgré la présence d'un organe de traction interne 4, chaque cellule 5 peut être alimentée avec un débit de fluide suffisant.

Comme illustré sur la figure 4, certains organes de traction internes 4 montés dans les ouvertures de circulation 50 des cellules 5 sont respectivement montés dans des gaines 6 afin de les isoler électriquement.

Une gaine 6 s'étend longitudinalement et comprend un orifice central dans lequel est monté un organe de traction 4. Ainsi, la gaine 6 permet d'éviter que l'organe de traction interne 4 ne soit en contact avec le fluide circulant dans la canalisation de circulation 20. De manière préférée, la gaine 6 est réalisée en un matériau neutre vis-à-vis des fluides circulants dans les canalisations de circulation 20, notamment du dihydrogène. Ainsi, la gaine 6 forme une protection autour de l'organe de traction 4 afin d'éviter toute réaction entre l'organe de traction 4 et le fluide mais également entre la gaine 6 et le fluide. En particulier, la gaine 6 permet une isolation électrique afin d'éviter tout court-circuit entre les plaques bipolaires.

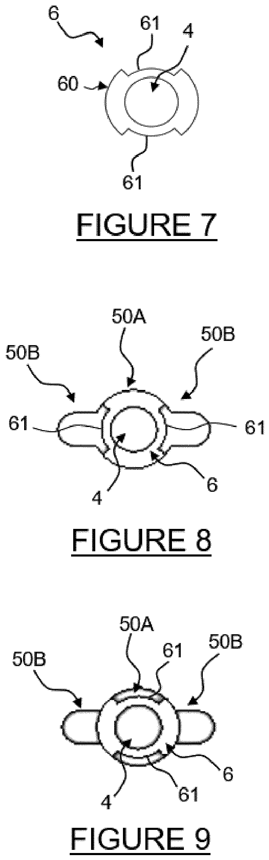

En référence à la figure 7, la gaine 6 comprend une surface de guidage 60 dont la forme est complémentaire avec une portion d'une ouverture de circulation de fluide 50 d'une cellule 5. Dans cet exemple, la surface de guidage 60 est sensiblement circulaire pour coopérer avec la portion centrale élargie 50A qui est circulaire. De manière avantageuse, la coopération entre la gaine 6 et les ouvertures de circulation 50 permet de guider les cellules 5 lors de leur empilement. Ainsi, la gaine 6 remplit une première fonction de protection de l'organe de traction interne 4 vis-à-vis du fluide et une deuxième fonction de guidage des cellules 5 lors de leur empilement.

Il va de soi que la surface de guidage 60 pourrait coopérer avec toute la périphérie d'une ouverture de circulation de fluide 50.

Dans cet exemple, des gaines 6 sont prévues dans les canalisations de circulation 20 de dihydrogène, de dioxygène et de liquide de refroidissement. De préférence, les gaines 6 sont montées dans les canalisations de circulation 20 les plus éloignées du centre des cellules 5 afin d'optimiser le guidage des cellules 5 lors de leur empilement tout en limitant le nombre de gaines 6 nécessaire à un tel guidage.

De manière préférée, chaque gaine 6 comprend des rainures longitudinales 61 afin de permettre d'augmenter la section de passage de fluide dans la canalisation de circulation 20. Dans cet exemple, chaque gaine 6 comporte deux rainures longitudinales 61 diamétralement opposées.

De manière avantageuse, comme illustré aux figures 8 à 10, la gaine 6 peut être orientée de manière à former un moyen de détrompage lors de l'assemblage des cellules 5 pour former un empilement 2. Cela est particulièrement avantageux lorsque les cellules 5 ne sont pas symétriques. De même, l'organe de traction 4 pourrait réaliser lui-même la fonction de détrompage.

Selon un aspect de l'invention, une gaine 6 peut être utilisée de manière temporaire lors de la formation de l'empilement 2 pour assurer le guidage des cellules 5 et retirée préalablement à la compression de l'empilement 2.

Il va maintenant être décrit le procédé s'assemblage d'une pile à combustible 1 selon l'invention en référence aux figures 3 et 4.

Tout d'abord, les organes de traction internes 4 sont reliés à une plaque terminale 3, ici une plaque terminale 3 inférieure, de manière étanche afin de s'étendre parallèlement à l'axe d'empilement X. Puis, des gaines 6 sont enfilées sur les organes de traction internes 4. Les cellules 5 sont ensuite coulissées sur les gaines 6 pour former l'empilement 2. En pratique, l'organe de traction interne 4 s'étend dans la portion élargie 50A de chaque ouverture de circulation de fluide 50 de chaque cellule 5.

Grâce aux organes de traction interne 4 et plus particulièrement grâce aux gaines 6, les ouvertures de circulation de fluide 50 des cellules 5 sont alignées pour former des canalisations de circulation 20 dans l'empilement 2. De préférence, des joints d'étanchéités sont également placés entre deux cellules 5 adjacentes afin d'assurer l'étanchéité. Autrement dit, les organes de traction internes 4 montés dans les gaines 6 permettent avantageusement de remplir une fonction de guidage.

Puis, la plaque terminale 3 supérieure est montée à l'extrémité supérieure de l'empilement 2. Chaque extrémité des organes de traction 4 est alors montée dans une ouverture d'alimentation 32 ou une ouverture d'évacuation 33 d'une plaque terminale 3 et traverse ladite plaque terminale 3.

Dans cet exemple, des organes de traction externe 4' sont également prévus pour relier directement les plaques terminales 3 sans s'étendre dans l'empilement 2. Les organes de traction 4, 4' sont répartis pour permettre une compression homogène desdites cellules 5.

Des écrous de serrage 7 sont ensuite montés aux extrémités des organes de traction 4, 4' afin de serrer les plaques terminales 3 autour de l'empilement 2 de manière à compresser les cellules 5. Les joints d'étanchéité placés entre chaque cellule 5 sont alors comprimés, ce qui permet d'assurer l'étanchéité des canalisations de circulation 20.

Lors de l'utilisation de la pile à combustible 1, les fluides sont introduits via les ouvertures d'alimentation 31 des plaques terminales 3 puis circulent dans les canalisations de circulation 20 de l'empilement 2 avant d'être évacués par les ouvertures d'évacuation 32 des plaques terminales 3.

Dans une canalisation de circulation donnée 20, le fluide circule dans les ouvertures de circulation 50 des cellules 5, en particulier dans les parties latérales 50B et dans les rainures 61 de la gaine 6. La section de passage demeure suffisante pour obtenir un rendement optimal. La présence d'une gaine 6, de préférence inerte vis-à-vis du fluide, permet d'éviter toute réaction indésirable avec la gaine 6 mais également avec l'organe de traction 4 qui demeure protégé.

La pile à combustible 1 selon l'invention présente ainsi un encombrement limité grâce au montage des organes de traction 4 dans les canalisations de circulation 20, c'est-à-dire, intégrés dans le volume de l'empilement.

## Revendications

1. Pile à combustible (1) comprenant :
- un empilement (2) comprenant une pluralité de cellules (5) alignées selon un axe d'empilement X, chaque cellule (5) comprenant une pluralité d'ouvertures de circulation de fluide (50), lesdites ouvertures de circulation de fluide (50) étant alignées parallèlement à l'axe d'empilement X afin de former une pluralité de canalisations de circulation de fluide (20) dans l'empilement (2),
- deux plaques terminales (3) placées aux extrémités de l'empilement (2) selon l'axe d'empilement X,
- au moins un organe de traction (4) reliant les plaques terminales (3) entre elles afin de comprimer l'empilement (2), l'organe de traction (4) étant monté dans une canalisation de circulation de fluide (20) de l'empilement (2),
- pile à combustible **caractérisée en ce que** chaque ouverture de circulation de fluide (50) de la canalisation de circulation de fluide (20), dans laquelle s'étend l'organe de traction (4), possède deux portions latérales étroites (50B) et une portion centrale élargie (50A).

2. Pile à combustible (1) selon la revendication 1, dans laquelle, la pile à combustible (1) comprenant une pluralité d'organes de traction (4) reliant les plaques terminales (3) entre elles afin de comprimer l'empilement (2), les organes de traction (4) sont respectivement montés dans des canalisations de circulation de fluide (20) de l'empilement (2).

3. Pile à combustible (1) selon l'une des revendications 1 à 2, dans laquelle la canalisation de circulation de fluide (20), dans laquelle s'étend l'organe de traction (4), présente une section supérieure à la section dudit organe de traction (4) afin de permettre la circulation d'un fluide dans la canalisation de circulation de fluide (20) extérieurement audit organe de traction (4).

4. Pile à combustible (1) selon l'une des revendications précédentes, dans laquelle chaque cellule (5) comporte uniquement des ouvertures de circulation de fluide (50).

5. Pile à combustible (1) selon l'une des revendications précédentes, dans laquelle l'organe de traction (4) est monté dans une gaine (6).

6. Pile à combustible (1) selon la revendication 5, dans laquelle la gaine (6) est configurée pour coopérer par complémentarité de formes avec les ouvertures de circulation de fluide (50) de la canalisation de circulation de fluide (20) dans laquelle est monté l'organe de traction (4).

7. Pile à combustible (1) selon l'une des revendications 5 et 6, dans laquelle la gaine (6) est réalisée dans un matériau neutre vis-à-vis du fluide circulant dans la canalisation de circulation de fluide (20) dans laquelle est monté l'organe de traction (4).

8. Pile à combustible (1) selon l'une des revendications 5 à 7, dans laquelle la gaine (6) comprend au moins une rainure de circulation de fluide (61).

9. Procédé d'assemblage d'une pile à combustible (1) selon l'une des revendications précédentes, ledit procédé comprenant :
- une étape de montage d'au moins un organe de traction (4) dans une canalisation de circulation de fluide (20) de l'empilement (2) et
- une étape de liaison des plaques terminales (3) par l'organe de traction (4) de manière à compresser l'empilement (2)

## Patentansprüche

1. Brennstoffzelle (1), umfassend:
- einen Stapel (2), der eine Vielzahl von Zellen (5) umfasst, die gemäß einer Stapelachse X ausgerichtet sind, wobei jede Zelle (5) eine Vielzahl von Fluidzirkulationsöffnungen (50) umfasst, wobei die Fluidzirkulationsöffnungen (50) parallel zur Stapelachse X ausgerichtet sind, um eine Vielzahl von Fluidzirkulationskanälen (20) im Stapel (2) zu bilden,
- zwei terminale Platten (3), die an den Enden des Stapels (2) gemäß der Stapelachse X platziert sind,
- mindestens ein Zugorgan (4), das die terminalen Platten (3) untereinander verbindet, um den Stapel (2) zu komprimieren, wobei das Zugorgan (4) in einem Fluidzirkulationskanal (20) des Stapels (2) angebracht ist,
wobei die Brennstoffzelle **dadurch gekennzeichnet ist, dass** jede Fluidzirkulationsöffnung (50) des Fluidzirkulationskanals (20), in der sich das Zugorgan (4) erstreckt, zwei schmale seitliche Abschnitte (50B) und einen erweiterten zentralen Abschnitt (50A) besitzt.

2. Brennstoffzelle (1) nach Anspruch 1, in der, wobei die Brennstoffzelle (1) eine Vielzahl von Zugorganen (4) umfasst, die die terminalen Platten (3) untereinander verbinden, um den Stapel (2) zu komprimieren, die Zugorgane (4) jeweils in Fluidzirkulationskanälen (20) des Stapels (2) angebracht sind.

3. Brennstoffzelle (1) nach einem der Ansprüche 1 bis 2, wobei der Fluidzirkulationskanal (20), in dem sich das Zugorgan (4) erstreckt, einen Querschnitt aufweist, der größer als der Querschnitt des Zugorgans (4) ist, um die Zirkulation eines Fluids im Fluidzirkulationskanal (20) äußerlich des Zugorgans (4) zu erlauben.

4. Brennstoffzelle (1) nach einem der vorangehenden Ansprüche, wobei jede Zelle (5) nur Fluidzirkulationsöffnungen (50) aufweist.

5. Brennstoffzelle (1) nach einem der vorangehenden Ansprüche, wobei das Zugorgan (4) in einer Hülle (6) montiert ist.

6. Brennstoffzelle (1) nach Anspruch 5, wobei die Hülle (6) ausgelegt ist, um durch Formenkomplementarität mit den Fluidzirkulationsöffnungen (50) des Fluidzirkulationskanals (20) zusammenzuwirken, in dem das Zugorgan (4) angebracht ist.

7. Brennstoffzelle (1) nach einem der Ansprüche 5 und 6, wobei die Hülle (6) aus einem gegenüber dem Fluid, das in dem Fluidzirkulationskanal (20) zirkuliert, in dem das Zugorgan (4) angebracht ist, neutralen Material hergestellt ist.

8. Brennstoffzelle (1) nach einem der Ansprüche 5 bis 7, wobei die Hülle (6) mindestens eine Fluidzirkulationsrille (61) umfasst.

9. Verfahren zum Zusammenbauen einer Brennstoffzelle (1) nach einem der vorangehenden Ansprüche, wobei das Verfahren umfasst:
- einen Montageschritt von mindestens einem Zugorgan (4) in einen Fluidzirkulationskanal (20) des Stapels (2) und
- einen Verbindungsschritt der terminalen Platten (3) durch das Zugorgan (4) derart, dass der Stapel (2) komprimiert wird.

## Claims

1. A fuel cell (1) comprising:
- a stack (2) comprising a plurality of cells (5) aligned along a stack axis X, each cell (5) comprising a plurality of fluid circulation openings (50), said fluid circulation openings (50) being aligned in parallel to the stack axis X so as to form a plurality of fluid circulation pipings (20) in the stack (2),
- two end plates (3) placed at the ends of the stack (2) along the stack axis X,
- at least one traction member (4) connecting the end plates (3) to each other in order to compress the stack (2), the traction member (4) being mounted in a fluid circulation piping (20) of the stack (2),
which fuel cell is **characterized in that** each fluid circulation opening (50) of the fluid circulation piping (20), into which the traction member (4) extends, has two narrow side portions (50B) and a widened central portion (50A).

2. The fuel cell (1) according to claim 1, wherein the fuel cell (1) comprising a plurality of traction members (4) connecting the end plates (3) to each other in order to compress the stack (2), the traction members (4) are respectively mounted in the fluid circulation pipings (20) of the stack (2).

3. The fuel cell (1) according to one of claims 1 to 2, wherein the fluid circulation piping (20), into which the traction member (4) extends, has a cross-sectional area larger than the cross-sectional area of said traction member (4) in order to allow a fluid to circulate in the fluid circulation piping (20) externally to said traction member (4).

4. The fuel cell (1) according to one of the preceding claims, wherein each cell (5) comprises only fluid circulation openings (50).

5. The fuel cell (1) according to one of the preceding claims, wherein the traction member (4) is mounted in a sheath (6).

6. The fuel cell (1) according to claim 5, wherein the sheath (6) is configured to cooperate in a form-fitting manner with the fluid circulation openings (50) of the fluid circulation piping (20) in which the traction member (4) is mounted.

7. The fuel cell (1) according to one of claims 5 and 6, wherein the sheath (6) is made of a material that is neutral with respect to the fluid circulating in the fluid circulation piping (20) in which the traction member (4) is mounted.

8. The fuel cell (1) according to one of claims 5 to 7, wherein the sheath (6) comprises at least one fluid circulation groove (61).

9. A method for assembling a fuel cell (1) according to one of the preceding claims, said method comprising:
- a step of mounting at least one traction member (4) in a fluid circulation piping (20) of the stack (2) and
- a step of connecting the end plates (3) through the traction member (4) so as to compress the stack (2).
